Europäisches Patentamt

European Patent Office

Office européen des brevets

(19)

(11) Veröffentlichungsnummer: **0 285 189 B1**

(12) # EUROPÄISCHE PATENTSCHRIFT

(45) Veröffentlichungstag der Patentschrift: **16.06.93**

(51) Int. Cl.5: **B01D 53/14**

(21) Anmeldenummer: **88200289.2**

(22) Anmeldetag: **18.02.88**

(54) **Verfahren zum Behandeln einer beladenen, unter Druck stehenden Waschlösung.**

(30) Priorität: **28.03.87 DE 3710360**

(43) Veröffentlichungstag der Anmeldung:
**05.10.88 Patentblatt 88/40**

(45) Bekanntmachung des Hinweises auf die
Patenterteilung:
**16.06.93 Patentblatt 93/24**

(84) Benannte Vertragsstaaten:
**DE FR GB GR NL SE**

(56) Entgegenhaltungen:
**EP-A- 0 202 600**
**DE-A- 2 410 737**

(73) Patentinhaber: **METALLGESELLSCHAFT AG**
**Reuterweg 14 Postfach 3724**
**W-6000 Frankfurt/M.1(DE)**

Patentinhaber: **Linde Akfiengesellschaft**

**W-8023 Höllriegelskreuth(DE)**

(72) Erfinder: **Grünewald, Gerhard**
**Ph. Wasserbergstrasse 17**
**W-6500 Mainz-Gonsenheim(DE)**
Erfinder: **Kammerer, Hans**
**Keltenstrasse 31**
**W-6000 Frankfurt 56(DE)**

(74) Vertreter: **Rieger, Harald, Dr.**
**Reuterweg 14**
**W-6000 Frankfurt a.M. (DE)**

**Beschreibung**

Die Erfindung betrifft ein Verfahren zum Behandeln einer beladenen Waschlösung, die in einer Waschzone bei einem Druck von 5 bis 100 bar durch direkten Kontakt mit einem zu reinigenden Gasgemisch, das $CO_2$ und mindestens eines der Wertgase Methan, Wasserstoff oder Kohlenmonoxid enthält, durch physikalisches Lösen $CO_2$ und mindestens eines der Wertgase aufgenommen hat, wobei man die beladene Waschlösung in einer Strippzone, die Stoffaustauschelemente enthält, auf einen Zwischendruck teilweise entspannt, ein Gasgemisch aus der Strippzone ableitet und die Waschlösung in einer der Strippzone nachgeschalteten Entspannungszone weiter entspannt.

Ein Verfahren dieser Art ist aus EP-A-0 202 600 bekannt, doch wird hierbei nicht darauf eingegangen, wie man die in die gebrauchte Waschlösung übergegangenen Wertgase wiedergewinnen kann.

Die Reinigung von Gasen durch physikalisch wirkende Waschlösungen, insbesondere die Entfernung von $CO_2$ und auch $H_2S$ aus diesen Gasen, ist seit langem bekannt. Verfahren dieser Art sind im DE-A-1 494 806 und in den US-A-3 531 917 und 3 710 546 beschrieben. Ebenfalls bekannt ist es, die beladene Waschlösung durch Entspannen, Erhitzen oder Strippen sowie auch durch eine Kombination dieser Maßnahmen zu regenerieren. Als physikalisch wirkende Waschlösungen kommen insbesondere Methanol oder N-Methyl-Pyrrolidon (NMP) in Frage. Die Gaswäschen arbeiten üblicherweise im Temperaturbereich von +60°C bis -80°C.

Bei der Gaswäsche nimmt die Waschlösung nicht nur Verunreinigungen, sondern auch gewisse Mengen an Wertgasen auf. Der Erfindung liegt deshalb die Aufgabe zugrunde, diese Wertgase aus der beladenen Waschlösung zumindest zum Teil wieder zurückzugewinnen. Beim eingangs genannten Verfahren geschieht dies erfindungsgemäß dadurch, daß man aus der nachgeschalteten Entspannungszone ein $CO_2$-reiches Entspannungsgas abzieht und das Entspannungsgas als Strippgas in die Strippzone leitet, daß man die Waschlösung aus der nachgeschalteten Entspannungszone in einer Regenerierung nachbehandelt und das aus der Strippzone abgeleitete, wertgashaltige Gasgemisch in einer Waschzone mit Waschlösung aus der Regenerierung in Kontakt bringt.

Vorteilhafterweise schaltet man der Strippzone eine Entspannungsstufe vor, welcher man die beladene Waschlösung aus der Waschzone zuführt und in welcher man die Waschlösung auf einen ersten Zwischendruck entspannt. Anschließend gelangt die Waschlösung in die Strippzone. In der vorgeschalteten Entspannungsstufe wird ein Teil der Wertgase zusammen mit etwas $CO_2$ freigesetzt, die der Strippzone zugeführte Waschlösung enthält dabei noch relativ viel $CO_2$. Der Druck in der Strippzone wird dann zweckmäßigerweise so gelegt werden, daß die Waschlösung in dieser Zone fast vollständig mit $CO_2$ gesättigt ist. Die Waschlösung kann deshalb aus dem Strippgas nur noch wenig $CO_2$ absorbieren, so daß relativ viel $CO_2$ als Strippgas wirksam wird.

Wenn man in der Waschzone Erdgas reinigt, sind als Wertgase neben Methan auch die zum Erdgas gehörenden höheren Kohlenwasserstoffe zu betrachten. Im Falle der Reinigung eines Synthesegases sind die Wertgase Wasserstoff und Kohlenmonoxid. Das Verfahren ist jedoch nicht auf diese beiden Gastypen beschränkt, sondern kann auch für andere Gasgemische angewandt werden.

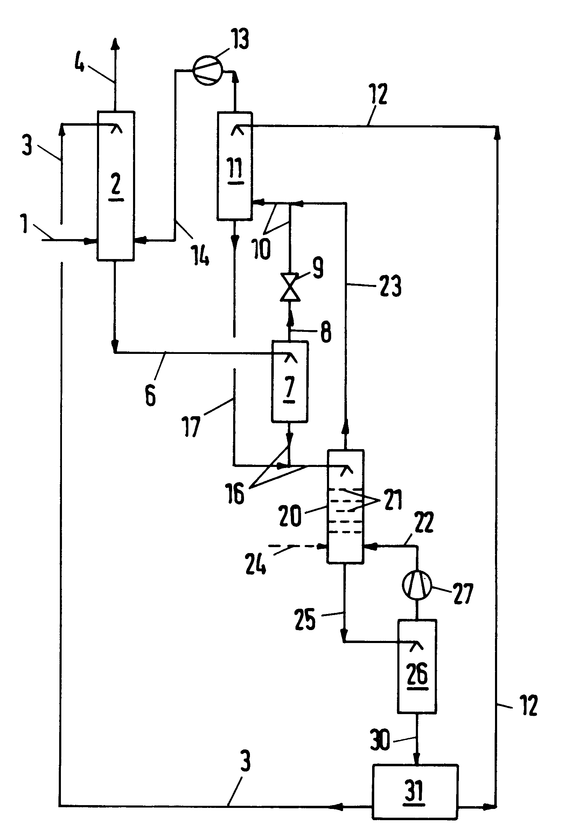

Ausgestaltungsmöglichkeiten des Verfahrens werden mit Hilfe der Zeichnung erläutert.

Das zu behandelnde Rohgas wird in der Leitung (1) der Waschzone (2) zugeführt, an deren Kopf durch die Leitung (3) regenerierte Waschlösung aufgegeben wird. Das Rohgas enthält neben mindestens einer Wertgaskomponenete, z.B. $CH_4$, $H_2$ oder CO, als Verunreinigung mindestens auch noch $CO_2$. Dieses $CO_2$ wird in der Waschzone (2) durch die Waschlösung mindestens teilweise aus dem Gasgemisch entfernt. Der Druck in der Waschzone (2) liegt üblicherweise im Bereich von 5 bis 100 bar und vorzugsweise im Bereich von 15 bis 80 bar. Das Reingas zieht in der Leitung (4) ab und die gebrauchte Waschlösung, die eine Temperatur im Bereich von +60°C bis -80°C besitzt, wird in der Leitung (6) einer vorgeschalteten Entspannungsstufe (7) zugeführt. Die Waschlösung wird in dieser Entspannungsstufe so weit entspannt, daß ein Entspannungsgas entsteht, das zu 5 bis 80 Vol.% aus Wertgasen besteht. Dieses Entspannungsgas wird in der Leitung (8) über ein Drosselventil (9) und eine Leitung (10) einer zweiten Waschzone (11) zugeführt. In der Waschzone (11) wird mit regenerierter Waschlösung aus der Leitung (12) vor allem das $CO_2$ aus dem eingeleiteten Gasgemisch weitgehend ausgewaschen. Die verbleibenden Gase, bei denen es sich vor allem um die Wertgase handelt, gibt man mit Hilfe des Verdichters (13) durch die Leitung (14) zurück in die erste Waschzone (2).

Die Waschlösung aus der vorgeschalteten Entspannungsstufe (7) gelangt durch die Leitung (16) zusammen mit der beladenen Waschlösung aus der zweiten Waschzone (11), die in der Leitung (17) herangeführt wird, zur Strippzone (20), in welcher ebenfalls eine Teilentspannung stattfindet. Diese Strippzone enthält Stoffaustauschelemente (21), z.B. an sich bekannte Böden oder Füllkörper. In den unteren Bereich der Strippzone (20) leitet man $CO_2$-reiches Entspannungsgas aus der Leitung (22) ein, welches in

2

der Strippzone als Strippgas wirkt. Zusätzlich oder alternativ kann $CO_2$-reiches Gas aus einer Fremdquelle durch die gestrichelt eingezeichnete Leitung (24) herangeführt werden. Am Kopf der Strippzone (20) leitet man ein Gasgemisch ab und gibt es durch die Leitung (23) ebenfalls der zweiten Waschzone (11) auf.

Man kann auf die vorgeschaltete Entspannungsstufe (7) auch verzichten, vor allem dann, wenn die Beladung des aus der Waschzone (2) ablaufenden Waschmittels mit Wertgasen relativ niedrig gegenüber der $CO_2$-Beladung ist. In diesem Fall leitet man die beladene Waschlösung in der Leitung (6) direkt in die Strippzone (20) zusammen mit der Waschlösung aus der Leitung (17).

Die in der Strippzone (20) behandelte Waschlösung gelangt in der Leitung (25) zu einer nachgeschalteten Entspannungszone (26). Die Waschlösung in der Leitung (25) enthält $CO_2$ und nur noch geringe Mengen an Wertgasen. Der Wertgas-Gehalt dieser Waschlösung beträgt höchstens noch 10 % und vorzugsweise höchstens 5 % des Wertgas-Gehalts der Waschlösung der Leitung (6). Die Entspannung in der Entspannungszone (26) führt zu einem überwiegend aus $CO_2$ bestehenden Entspannungsgas, das durch den Verdichter (27) abgezogen und in der Leitung (22) der Strippzone (20) zugeführt wird. Falls die in der Leitung (30) ablaufende Waschlösung noch nicht ausreichend regeneriert ist, wird sie noch in einer Regenerierung (31) nachbehandelt. Hierbei kann man in an sich bekannter Weise die üblichen Regenerierungsbehandlungen, nämlich Entspannen, Strippen und/oder Heißregenerieren, anwenden. Die regenerierte Waschlösung gelangt in den Leitungen (3) und (12) zurück in die Waschzonen (2) und (11). Wenn man auf die Regenerierung (31) verzichtet, führt man die Waschlösung der Leitung (30) zurück zu den beiden Waschzonen (2,11).

BEISPIEL

In einer der Zeichnung entsprechenden Verfahrensführung, bei der allerdings die zweite Waschzone (11) weggelassen ist, gibt man der Waschzone (2) ein Methan-$CO_2$-Gasgemisch auf, wobei man der Waschzone pro Stunde jeweils 2232 Kmol $CH_4$ und $CO_2$ zuführt. Die weitgehende Entfernung des $CO_2$ erfolgt bei einem Druck von 70 bar mit einer NMP-Waschlösung, die in einer Menge von 565 $m^3$/h mit einem $CO_2$-Gehalt von 204 Kmol/h in der Leitung (3) herangeführt wird und die Waschzone mit einer Temperatur von 27 °C in der Leitung (6) verläßt. Der Druck in der Entspannungsstufe (7) liegt bei 30 bar, in der Strippzone (20) bei 20 bar und in der Entspannungszone (26) bei 15 bar.

Der Gehalt (in Kmol/h) and $CO_2$ und $CH_4$ in der Waschlösung in den Leitungen (6), (16), (25) und (30) ist folgender:

|  | 6 | 16 | 25 | 30 |
|---|---|---|---|---|
| $CO_2$ | 2356 | 2107 | 2154 | 1662 |
| $CH_4$ | 170 | 49 | 0,52 | 0,02 |

Die Gasgemische in den Leitungen (4), (8), (23) und (22) bestehen aus $CO_2$ und $CH_4$ mit folgenden Anteilen (in Kmol/h):

|  | 4 | 8 | 23 | 22 |
|---|---|---|---|---|
| $CO_2$ | 80 | 249 | 445 | 492 |
| $CH_4$ | 2062 | 121 | 48,98 | 0,5 |

Das im gereinigten Gas der Leitung (4) fehlende Methan wird also durch die Gasgemsiche der Leitungen (8) und (23) fast vollständig wieder zurückgewonnen.

**Patentansprüche**

1. Verfahren zum Behandeln einer beladenen Waschlösung, die in einer Waschzone (2) bei einem Druck von 5 bis 100 bar durch direkten Kontakt mit einem zu reinigenden Gasgemisch, das $CO_2$ und

mindestens eines der Wertgase Methan, Wasserstoff oder Kohlenmonoxid enthält, durch physikalisches Lösen $CO_2$ und mindestens eines der Wertgase aufgenommen hat, wobei man die beladene Waschlösung in einer Strippzone (20), die Stoffaustauschelemente enthält, auf einen Zwischendruck teilweise entspannt, ein Gasgemisch aus der Strippzone ableitet und die Waschlösung in einer der Strippzone nachgeschalteten Entspannungszone (26) weiter entspannt, dadurch gekennzeichnet, daß man aus der nachgeschalteten Entspannungszone ein $CO_2$-reiches Entspannungsgas abzieht und das Entspannungsgas als Strippgas in die Strippzone leitet, daß man die Waschlösung aus der nachgeschalteten Entspannungszone (26) in einer Regenerierung (31) nachbehandelt und das aus der Strippzone (20) abgeleitete, wertgashaltige Gasgemisch in einer Waschzone (2,11) mit Waschlösung aus der Regenerierung (31) in Kontakt bringt.

2. Verfahren nach Anspruch 1, dadurch gekennzeichnet, daß man die Waschlösung aus der Waschzone zunächst in einer der Strippzone (20) vorgeschalteten Entspannungsstufe (7) auf einen ersten Zwischendruck teilweise entspannt, das Entspannungsgas ableitet und die Waschlösung anschließend der Strippzone zuführt.

3. Verfahren nach Anspruch 1 oder 2, dadurch gekennzeichnet, daß man das Gasgemisch aus der Strippzone (20) und/oder das Entspannungsgas der vorgeschalteten Entspannungsstufe (7) in einer zweiten Waschzone (11) mit Waschlösung aus der Regenerierung (31) behandelt und $CO_2$ mindestens teilweise auswäscht, daß man das behandelte Gas ableitet und die beladene Waschlösung der Strippzone zuführt.

## Claims

1. A method for treating a laden washing solution which, by direct contact with a gas mixture which is to be purified and which contains $CO_2$ and at least one of the valuable gases methane, hydrogen or carbon monoxide, has absorbed $CO_2$ and at least one of the valuable gases by physical dissolving in a scrubbing zone (2) at a pressure of 5 to 100 bar, the laden washing solution undergoing partial pressure-relief to an intermediate pressure in a stripping zone (20) which contains exchange-promoting elements, a gas mixture being branched off from the stripping zone and the washing solution undergoing further pressure-relief in a pressure-relief zone (26) succeeding the stripping zone, characterised in that a $CO_2$-rich pressure-relief gas is withdrawn from the subsequent pressure-relief zone and the pressure-relief gas is passed into the stripping zone as a stripping gas, that the washing solution from the subsequent pressure-relief zone (26) is subsequently treated in a regeneration stage (31) and the gas mixture containing valuable gas which is branched off from the stripping zone (20) is brought into contact with washing solution from the regeneration stage (31) in a scrubbing zone (2, 11).

2. A method according to Claim 1, characterised in that the washing solution from the scrubbing zone first undergoes partial pressure-relief to a first intermediate pressure in a pressure-relief stage (7) which precedes the stripping zone (20), the pressure-relief gas is branched off and the washing solution is then fed to the stripping zone.

3. A method according to Claim 1 or 2, characterised in that the gas mixture from the stripping zone (20) and/or the pressure-relief gas from the preceding pressure-relief stage (7) is treated with washing solution from the regeneration stage (31) in a second scrubbing zone (11) and $CO_2$ is at least partially washed out, that the treated gas is branched off and the laden washing solution is fed to the stripping zone.

## Revendications

1. Procédé de traitement d'une solution de lavage chargée qui a absorbé, dans une zone de lavage (2), sous une pression de 5 à 100 bar, par contact direct avec un mélange gazeux à épurer contenant $CO_2$ et au moins l'un des gaz ayant de la valeur que sont le méthane, l'hydrogène ou le monoxyde de carbone, $CO_2$ et au moins l'un des gaz ayant de la valeur par dissolution physique, qui consiste à détendre au moins partiellement jusqu'à une pression partielle la solution de lavage chargée dans une zone d'entraînement (20), qui contient des éléments de transfert de matière, à évacuer de la zone d'entraînement un mélange gazeux et à détendre davantage la solution de lavage dans une zone de détente (26), en aval de la zone d'entraînement, caractérisé en ce qu'il consiste à retirer, de la zone de détente en aval, un gaz de détente riche en $CO_2$ et à envoyer le gaz de détente, en tant que gaz d'entraînement, à la zone d'entraînement, à faire subir à la solution de lavage, provenant de la zone de détente (26) en aval, un traitement ultérieur dans une régénération (31) et à mettre le mélange gazeux évacué de la zone d'entraînement (20) et contenant du gaz de valeur, en contact dans une zone de lavage (2,11) avec une solution de lavage provenant de la régénération (31).

2. Procédé suivant la revendication 1, caractérisé en ce qu'il consiste à détendre partiellement, à une première pression intermédiaire, la solution de lavage provenant de la zone de lavage, d'abord dans un étage (7) de détente en amont de la zone d'entraînement (20), à évacuer le gaz de détente et à envoyer ensuite la solution de lavage à la zone d'entraînement.

3. Procédé suivant la revendication 1 ou 2, caractérisé en ce qu'il consiste à traiter le mélange gazeux provenant de la zone d'entraînement (20) et/ou le gaz de détente de l'étage (7) de détente en amont, dans une seconde zone de lavage (11) par de la solution de lavage provenant de la régénération (31) et à éliminer au moins partiellement le $CO_2$ par lavage, à évacuer le gaz traité, et à envoyer la solution de lavage chargée à la zone d'entraînement.